# FASCICULE DE BREVET EUROPEEN

(11) **EP 2 397 410 B1**
(45) Date de publication et mention de la délivrance du brevet: **08.06.2016**
(21) Numéro de dépôt: 11305049.6
(22) Date de dépôt: 18.01.2011
(51) Int. Cl.: B64D 29/06, B64D 29/08

(54) **Dispositif de liaison fusible entre une partie mobile et une partie fixe d'une nacelle d'aéronef**
Vorrichtung zur Sicherungsverbindung eines beweglichen und eines feststehenden Teils einer Triebwerksgondel
Fusible link device between a mobile part and a stationary part of an aircraft nacelle

(30) Priorité: 20.01.2010 FR 1050344
(43) Date de publication de la demande: 21.12.2011
(73) Titulaire: Airbus Opérations SAS, 31060 Toulouse (FR)
(72) Inventeur: Porte, Alain, 31770 Colomiers (FR); Lalane, Jacques, 31650 Saint Orens de Gameville (FR); Alvarez, Franck, 31300 Toulouse (FR)
(74) Mandataire: Fantin, Laurent

(56) Documents cités:
- EP-A1- 0 453 360
- GB-A- 2 259 954
- US-A- 4 147 029
- US-A- 4 283 028

## Description

La présente invention se rapporte à un dispositif de liaison fusible entre une partie mobile et une partie fixe d'une nacelle d'aéronef, plus particulièrement entre une porte et le reste de la nacelle.

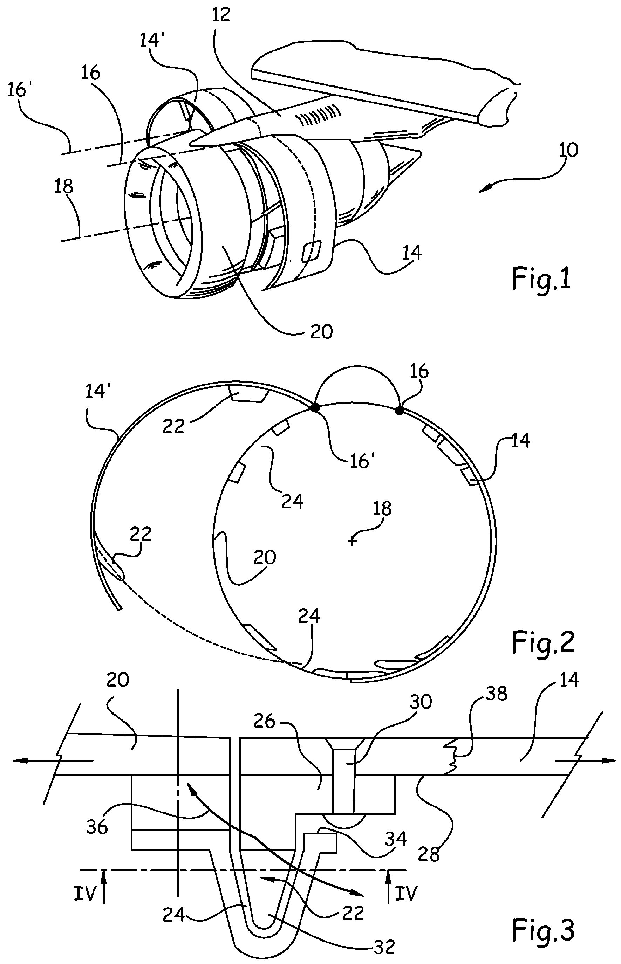

Comme illustré sur les figures 1 et 2, la motorisation d'un aéronef est intégrée à l'intérieur d'une structure, appelée par la suite nacelle 10, reliée par des moyens de liaison à l'aéronef, notamment par un mât 12 à la voilure.

Cette nacelle a plusieurs fonctions, notamment celles de réguler et maîtriser les mouvements de l'air autour et dans le moteur afin d'optimiser les flux aérodynamiques, de protéger le moteur des éléments extérieurs, d'atténuer les nuisances sonores, de ventiler les zones internes, de participer à la répartition des efforts mécaniques du moteur et éventuellement de supporter les systèmes d'inversion de poussée.

Enfin, la nacelle doit permettre la maintenance quotidienne et l'entretien du moteur et de ses composants.

A cet effet, la nacelle comprend au niveau de sa surface extérieure une ouverture permettant l'accès à l'intérieur de la nacelle et une partie mobile 14 susceptible d'occuper au moins deux positions, une première position dite fermée, à droite sur la figure 2 dans laquelle ladite partie mobile est disposée dans le prolongement de la surface extérieure de la nacelle de manière à obturer ladite ouverture et une deuxième position dans laquelle elle dégage au moins partiellement l'ouverture, sur la figure 1 ou à gauche sur la figure 2.

Pour la suite de la description, la partie mobile 14 est appelée porte.

Généralement, la nacelle 10 comprend deux portes 14, 14' symétriques, articulées autour d'axes de pivotement 16, 16' parallèles à l'axe longitudinal 18 de la nacelle, disposés de part et d'autre du mât 12.

Selon cette configuration, les bords inférieurs des portes 14, 14' sont sensiblement jointifs en position fermée et maintenus dans cette position par des mécanismes de verrouillage répartis le long des bords inférieurs des portes.

En vol les différentes parties de la nacelle, notamment la porte 14 et la partie fixe 20 en amont subissent des contraintes qui tendent à les écarter l'une de l'autre selon la direction longitudinale.

Or, il est important que l'air ne passe pas entre la partie fixe et la porte afin de ne pas engendrer un phénomène d'écopage susceptible de nuire aux performances aérodynamiques de l'aéronef et/ou de solliciter de manière trop importante les mécanismes de verrouillage de la porte.

Pour limiter le mouvement relatif selon la direction longitudinale entre la porte et la partie fixe de la nacelle disposée en amont, la porte comprend au niveau de sa face orientée vers l'intérieur de la nacelle, à proximité de son bord amont, au moins un indexeur 22, également appelé couteau, apte à se loger dans un logement 24 ménagé au niveau du bord correspondant de la partie fixe 20.

Généralement, comme illustré sur la figure 2, la porte 14 comprend plusieurs indexeurs 22 disposés entre l'axe de pivotement de la porte et son bord inférieur.

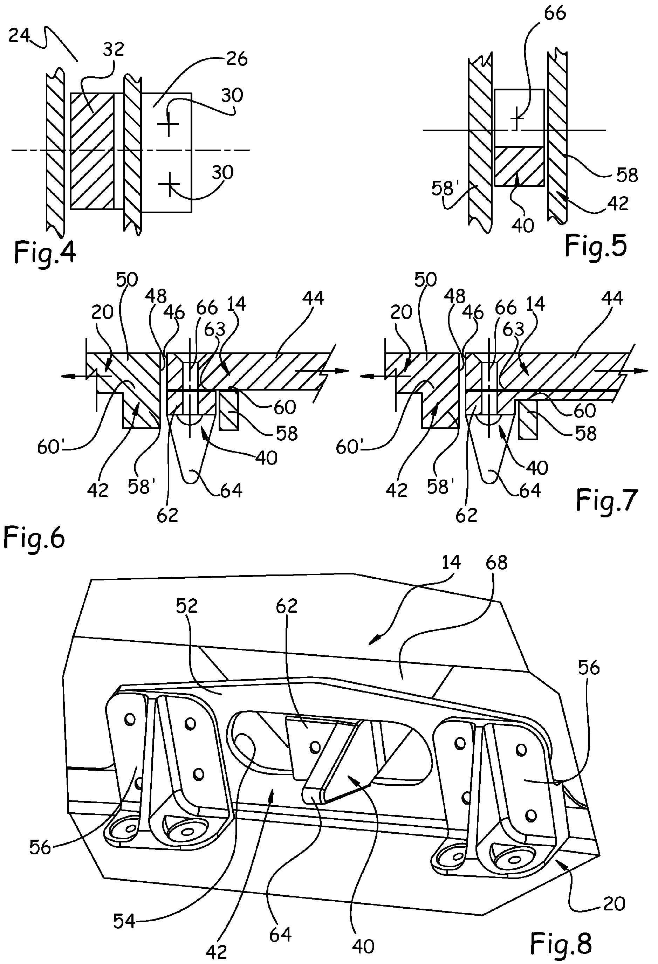

Comme illustré en détails sur les figures 3 et 4, un indexeur 22 comprend une forme en L avec une base 26 plaquée contre la face intérieure 28 de la porte et solidarisée par des rivets 30 à ladite porte et un élément en saillie 32 sous forme d'un doigt.

En complément, la partie fixe comprend un logement 24 dont les formes coopèrent avec celles de l'élément en saillie 32. Selon un mode de réalisation, ce logement est obtenu à partir d'une plaque offrant une surface d'appui 34 sensiblement parallèle à la base 26 de l'indexeur dans laquelle est ménagée une découpe de manière à obtenir un trou assurant la fonction de logement ou un pliage de manière à obtenir une forme en creux assurant la fonction de logement. Selon cet agencement, la plaque comportant le logement 24 est écartée de la face intérieure 28 de la porte en raison de la présence de la base 26 de l'indexeur.

Normalement les rivets 30 sont dimensionnés de manière à assurer la fonction de fusible et éviter que la porte ne se détériore en cas de sollicitations accidentelles trop importantes.

Ce type de montage peut convenir lorsque la porte est métallique.

Toutefois, il en est autrement lorsque la pièce est réalisée en matériau composite.

En effet, compte tenu de l'agencement des différents éléments et notamment de l'écartement de la plaque comportant le logement 24 par rapport à la surface intérieure 28 de la porte, il apparaît des contraintes sous forme de flexion (matérialisées par la double flèche 36) qui sont difficilement supportées par un panneau en matériau composite. Ainsi, en cas de sollicitations accidentelles trop importantes, la paroi de la porte en matériau composite tend à se rompre le long d'une ligne 38 décalée par rapport à l'indexeur 22 en lieu et place des rivets qui ne jouent plus leurs rôles de fusibles. Or le changement de la porte est plus long et plus coûteux que le changement d'un ou des indexeurs 22 ou de leurs fixations.

Le document GB 2.259.954 décrit sensiblement le même enseignement que les figures 3 et 4.

Le document EP 0.453.360 illustre un accouplement entre un capot et une partie fixe de la nacelle. Le capot présente une rainure annulaire qui coopère avec un anneau relié à la partie fixe de la nacelle. Cet anneau comprend une face de fixation perpendiculaire au plan du capot.

Aussi, la présente invention vise à pallier aux inconvénients de l'art antérieur en proposant un dispositif de liaison entre une porte et le restant d'une nacelle d'aéronef qui tend à réduire les risques d'endommagement de la porte.

A cet effet, l'invention a pour objet une nacelle d'aéronef selon la revendication 1.

D'autres caractéristiques et avantages ressortiront de la description qui va suivre de l'invention, description donnée à titre d'exemple uniquement, en regard des dessins annexés sur lesquels :
- la figure 1 est une vue en perspective d'une nacelle d'aéronef avec des portes en position ouverte,
- la figure 2 est un schéma illustrant une nacelle d'aéronef avec une porte ouverte et une porte fermée,
- la figure 3 est une coupe illustrant en détails un dispositif de liaison entre une porte et la partie fixe en amont de la nacelle selon l'art antérieur,
- la figure 4 est une coupe selon la ligne IV-IV de la figure 3,
- la figure 5 est une coupe selon un plan parallèle à la porte illustrant de manière schématique un dispositif de liaison entre une porte et la partie fixe en amont de la nacelle selon l'invention,
- la figure 6 est une coupe selon un plan perpendiculaire au plan de la porte du dispositif de l'invention,
- la figure 7 est une coupe selon un plan perpendiculaire au plan de la porte d'un dispositif de liaison,
- la figure 8 est une vue en perspective d'un dispositif selon une première variante de l'invention,
- la figure 9 est une vue de dessus du dispositif illustré sur la figure 8,
- la figure 10 est une vue latérale du dispositif illustré sur la figure 8, et
- la figure 11 est une vue en perspective d'une dispositif selon une autre variante de l'invention.

L'invention se rapporte plus particulièrement à un dispositif de liaison entre une porte 14 et la partie fixe 20 d'une nacelle d'aéronef permettant de limiter le mouvement relatif entre ces deux éléments selon la direction longitudinale qui correspond sensiblement à la direction principale d'écoulement de l'air à l'extérieur de la nacelle en vol.

Ce dispositif de liaison comprend d'une part un élément mâle appelé également indexeur ou couteau 40 relié à la porte, et d'autre part, une partie femelle 42 dont les formes sont adaptées pour retenir l'élément mâle 40 et limiter le mouvement relatif selon la direction de l'écoulement de l'air. Avantageusement, les formes de la partie femelle autorisent un mouvement relatif de rotation autour de l'axe longitudinal de la nacelle entre les deux éléments.

En variante, on peut envisager l'élément mâle relié à la partie fixe et la partie femelle reliée à la porte.

Pour simplifier les explications, la porte 14 se présente sous forme d'une plaque 44 présentant un chant 46 orienté vers la partie fixe, disposée en amont de ladite porte 14. De préférence, la plaque 44 est réalisée en matériau composite.

En complément, la partie fixe 20 comprend un bord 48 amont, orienté vers le chant 46 de la porte 14 sous forme d'une plaque 50.

Selon un mode de réalisation, la partie femelle 42 comprend une plaque 52 disposée dans un plan sensiblement perpendiculaire à la direction radiale (parallèle à la porte) comportant un orifice 54 apte à loger un indexeur 40, ladite plaque étant reliée à la partie fixe 20 par tous moyens appropriés. La partie femelle peut être reliée à la partie fixe grâce à des équerres 56, des éléments de liaison assurant la solidarisation des équerres 56 à la partie fixe et des équerres 56 à la plaque 52. Ces équerres et lesdits éléments de liaison peuvent être utilisés pour constituer une zone de moindre résistance apte à se rompre en cas de sollicitations trop importantes afin de limiter les détériorations des autres éléments du dispositif de liaison.

Selon une variante minimaliste, pour assurer la limitation du mouvement selon la direction de l'écoulement de l'air de l'élément mâle 40, la partie femelle 42 comprend au moins une butée 58 disposée en aval de l'indexeur par rapport à la direction de l'écoulement de l'air comportant une surface 60 orientée vers la porte.

Dans le cas d'un orifice 54, la partie femelle 42 comprend deux butées 58, 58' espacées d'une distance E selon la direction de l'écoulement de l'air comportant chacune une surface 60, 60' orientée vers la porte 14, la partie du chant de l'orifice disposée en aval de l'indexeur selon la direction longitudinale assurant la fonction de butée 58 alors que la partie du chant de l'orifice disposée en amont de l'indexeur selon la direction longitudinale assure la fonction de butée 58'.

L'indexeur 40 comprend une base 62 dont une face 63 dite face de fixation est orientée vers la porte 14 et une partie proéminente 64 rapportée sur la face de la base opposée à sa face de fixation.

La base 62 et la partie proéminente 64 sont réalisées généralement d'un seul tenant.

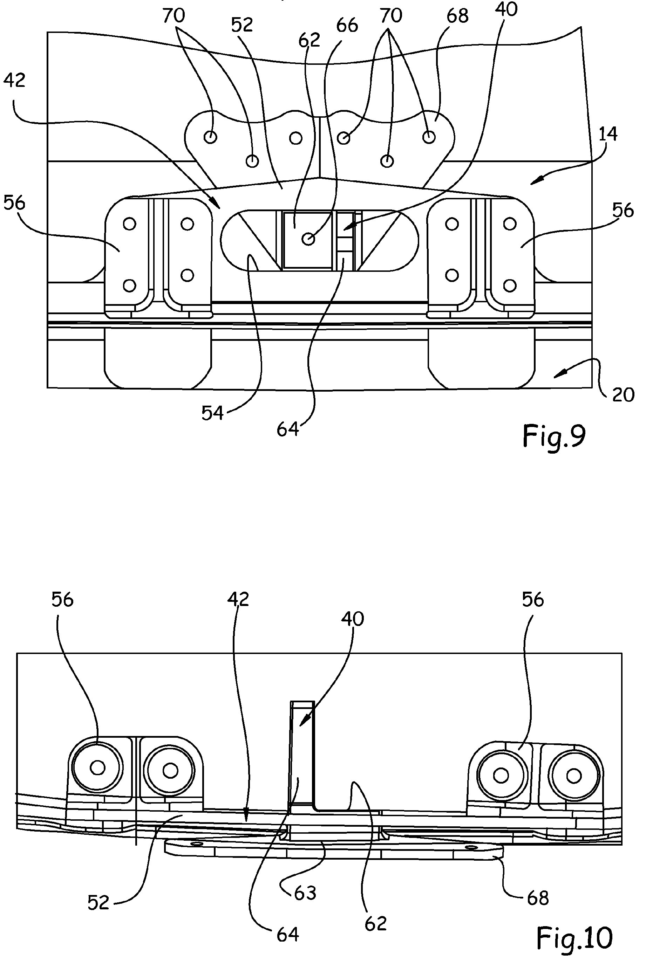

Selon les variantes, l'indexeur 40 est fixé par un ou plusieurs éléments de fixation 66 directement à la porte 14 comme illustré sur les figures 5 à 7, ou indirectement par l'intermédiaire d'une plaque intercalaire 68, comme illustré sur les figures 8 à 11, elle-même fixée à la porte par des moyens 70 de fixation secondaire.

Pour assurer sa solidarisation à la porte ou à la plaque intercalaire, l'indexeur comprend au moins un trou de passage dont l'axe est orienté selon la direction radiale dans lequel se loge un élément de fixation 66 comprenant une tige comme un boulon ou un rivet.

Selon l'invention, l'axe du ou des trous de passage prévu(s) pour la fixation de l'indexeur 40 est disposé en amont de la butée 58 limitant le mouvement de la porte selon la direction de l'écoulement de l'air. De ce fait la base 62 de l'indexeur est disposée en amont de la butée 58 de manière à ce que la surface 60 de la butée 58 soit la plus proche de la face de fixation 63 de l'indexeur.

Lorsque la partie femelle comprend deux butées 58, 58' espacées d'un écartement E selon la direction d'écoulement de l'air, l'axe du ou des trous de passage prévu(s) pour la fixation de l'indexeur 40 est disposé entre les deux butées 58, 58'. De ce fait, la base 62 de l'indexeur est disposée entre les butées 58 et 58' de manière à ce que la surface 60 de la butée 58 soit la plus proche de la face de fixation 63 de l'indexeur.

Cet agencement permet d'obtenir une résultante des efforts entre la partie mâle et la partie femelle disposée sensiblement dans un plan parallèle à la face de fixation 63 et proche de ladite face de fixation 63. Cela permet d'obtenir pour le ou les éléments de fixation 66 essentiellement des contraintes de cisaillement au niveau de la face de fixation 63. Ainsi, en cas de contraintes accidentelles trop importantes, la tige du ou des élément de fixation 66 est soumise à des contraintes de cisaillement au niveau de la face de fixation 63 qui tendent à la cisailler si bien que l'élément de fixation assure sa fonction de fusible.

Selon un mode réalisation ne faisant pas partie de l'invention illustré sur la figure 7, l'indexeur 40 peut comprendre une partie sous forme d'une fine plaque intercalée entre la porte et la butée 58 ou 58', les éléments de fixation 66 assurant l'essentiel de la reprise des efforts entre l'indexeur et la porte.

Avantageusement, la partie femelle se présente sous la forme d'une plaque de faible épaisseur, inférieure à 6 mm de manière à rapprocher de la face de fixation 63 la résultante des efforts entre la partie mâle et la partie femelle.

De plus, cet agencement permet de limiter l'apparition de contraintes sous forme de moment et d'obtenir essentiellement des contraintes de cisaillement dans un plan parallèle au plan de la porte. Ces contraintes de cisaillement sont supportées par une porte réalisée en matériau composite.

Ainsi en cas d'incident, seul l'indexeur ou l'élément de fixation sont à changer ce qui tend à réduire les temps d'immobilisation et les coûts de réparation.

Selon un mode de réalisation, l'indexeur 40 comprend une base 62 avec une section rectangulaire surmontée d'une partie proéminente 64 sous forme d'une plaque avec une section triangulaire dont un côté est solidaire de la base et dont le sommet opposé est arrondi pour favoriser le guidage de l'indexeur dans son logement.

Selon un mode de réalisation, l'indexeur 40 est relié directement à la porte à l'aide d'au moins un élément de fixation.

Selon une autre variante, l'indexeur 40 est relié à une plaque intercalaire 68 à l'aide d'au moins un élément de fixation 66, ladite plaque intercalaire 68 étant reliée à la porte 14 par un ou plusieurs éléments de fixation 70.

Selon une autre caractéristique de l'invention, les éléments de fixation 70 ont une résistance au cisaillement différente de celle du ou des éléments de fixation 66 afin de privilégier une zone de rupture, soit entre la porte 14 et la plaque intercalaire 68 ou soit entre la plaque intercalaire 68 et l'indexeur 40.

De préférence, cette plaque intercalaire 68 a une section approximativement triangulaire, l'indexeur étant fixé à un sommet, les éléments de fixation à la porte étant répartis à proximité du côté opposé de manière à ne pas concentrer les contraintes mais à les répartir sur une plus grande surface.

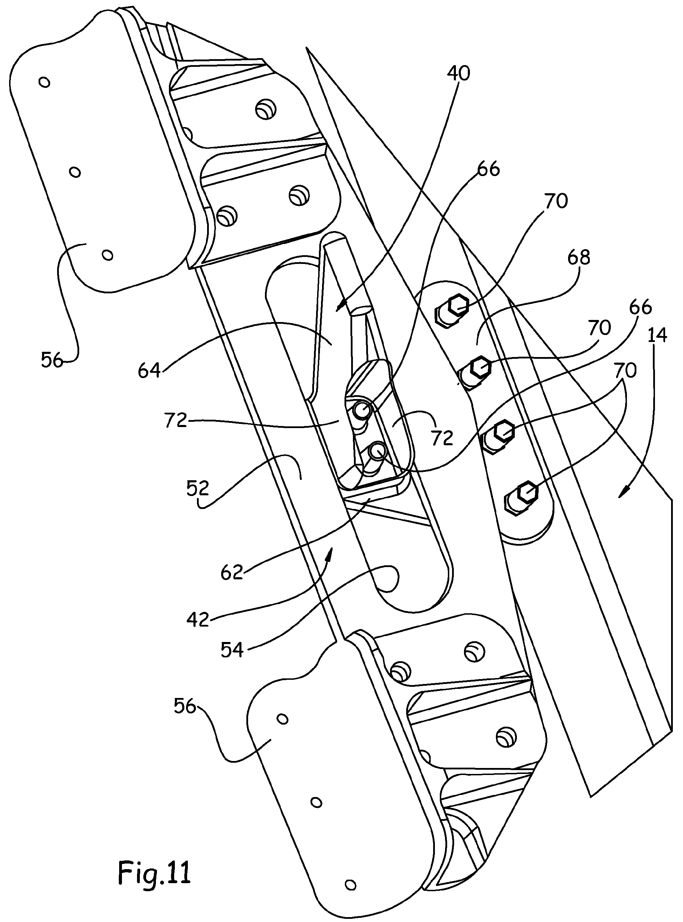

Selon son emplacement sur la porte, la partie proéminente 64 est sensiblement perpendiculaire à la base 62 notamment lorsque l'indexeur est proche de l'axe d'articulation de la porte, comme illustré sur les figures 2, 8 à 10, ou inclinée par rapport à la base 62, notamment lorsque l'indexeur est éloigné de l'axe de l'articulation de la porte, pour autoriser la pénétration de l'indexeur 40 dans son logement lors du mouvement de fermeture de la porte, comme illustré sur la figure 11. Lorsque la partie proéminente 64 est inclinée au moins un renfort 72 peut être prévu entre la base et la partie proéminente pour renforcer la rigidité de l'indexeur. Sur la figure 11, l'indexeur comprend deux renforts 72 entre lesquels sont prévus les trous de passage des éléments de fixation 66.

## Revendications

1. Nacelle d'aéronef comportant au moins une partie, appelée porte (14), sous forme d'une plaque (44) en matériau composite, mobile par rapport à une partie fixe (20) et un dispositif de liaison permettant de limiter l'écartement entre ladite porte et ladite partie fixe selon une première direction correspondant à la direction principale d'écoulement de l'air à l'extérieur de la nacelle en vol, ledit dispositif comportant d'une part un indexeur (40) relié au bord amont de la porte (14) comportant une face de fixation (63) parallèle au plan de la porte (14), et d'autre part, au moins une butée (58) reliée à la partie fixe (20) contre laquelle peut prendre appui ledit indexeur (40) de manière à limiter son mouvement selon ladite première direction, **caractérisée par** au moins un élément de fixation (66) orienté selon une seconde direction radiale perpendiculaire au plan de la porte (14), ledit au moins un élément de fixation (66) étant disposé en amont de la butée (58) selon la première direction, ladite au moins une butée (58) comportant une face (60) en regard de la porte disposée sensiblement au niveau de la face de fixation (63) de l'indexeur (40).

2. Nacelle d'aéronef selon la revendication 1, le dispositif de liaison comprenant une partie femelle avec deux butées (58, 58') espacées d'un écartement E selon la première direction d'écoulement de l'air pour limiter le mouvement de l'indexeur selon ladite première direction, **caractérisée en ce que** ledit au moins un élément de fixation (66) est disposé entre les deux butées (58, 58').

3. Nacelle d'aéronef selon la revendication 1 ou 2, **caractérisée en ce que** la partie femelle se présente sous la forme d'une plaque (52), disposée dans un plan sensiblement perpendiculaire à la seconde direction radiale comportant un orifice (54) apte à loger un indexeur (40), avec une faible épaisseur, inférieure à 6 mm.

4. Nacelle d'aéronef selon la revendication 3, **caractérisée en ce que** la plaque (52) est reliée à la partie fixe grâce à des équerres (56), des éléments de liaison assurant la solidarisation desdites équerres (56) à la partie fixe (20) et desdites équerres (56) à ladite plaque (52).

5. Nacelle d'aéronef selon l'une quelconque des revendications 1 à 4, **caractérisée en ce que** l'indexeur (40) est relié à une plaque intercalaire (68) à l'aide d'au moins un élément de fixation (66), ladite plaque intercalaire (68) étant reliée à la porte (14) par un ou plusieurs éléments de fixation (70).

6. Nacelle d'aéronef selon la revendication 5, **caractérisée en ce que** le ou les éléments de fixation (70) de ladite plaque intercalaire (68) à la porte (14) ont une résistance au cisaillement différente de celle du ou des éléments de fixation (66) de l'indexeur (40) à ladite tôle intercalaire (68).

7. Nacelle d'aéronef selon la revendication 5 ou 6, **caractérisée en ce que** ladite plaque intercalaire (68) a une section approximativement triangulaire, l'indexeur (40) étant fixé à un sommet, les éléments de fixation (70) à la porte étant répartis à proximité du côté opposé de manière à ne pas concentrer les contraintes mais à les répartir sur une plus grande surface.

## Patentansprüche

1. Gondel eines Luftfahrzeugs mit wenigstens einem Teil, einer sogenannten Klappe (14), in der Gestalt einer Platte (44) aus Verbundmaterial und bezüglich einem festen Teil (20) beweglich, und mit einer Verbindungsvorrichtung, die es gestattet, den Zwischenraum zwischen der Klappe und dem festen Teil in eine erste Richtung zu begrenzen, die der Hauptflussrichtung der Luft außerhalb der Gondel während des Flugs entspricht, wobei die Vorrichtung einerseits einen Zapfen (40) aufweist, der mit dem stromaufwärts gelegenen Rand der Klappe (14) verbunden ist und eine zur Ebene der Klappe (14) parallele Befestigungsfläche (63) aufweist, und andererseits wenigstens einen Anschlag (58) aufweist, der mit dem festen Teil (20) verbunden ist, und gegen den sich der Zapfen (40) abstützen kann, um seine Bewegung in die erste Richtung zu begrenzen, **gekennzeichnet durch** wenigstens ein Befestigungselement (66), das in eine radiale, zweite Richtung im rechten Winkel zur Ebene der Klappe (14) ausgerichtet ist, wobei das wenigstens eine Befestigungselement (66) in Strömungsrichtung vor dem Anschlag (58) bezüglich der ersten Richtung angeordnet ist, wobei der wenigstens eine Anschlag (58) eine der Klappe zugewandte Oberfläche (60) aufweist, die im Wesentlichen im Bereich der Befestigungsfläche (63) des Zapfens (40) angeordnet ist.

2. Gondel eines Luftfahrzeugs nach Anspruch 1, wobei die Verbindungsvorrichtung einen weiblichen Teil mit zwei Anschlägen (58, 58') aufweist, die in einer Entfernung E im Abstand bezüglich der ersten Richtung der Luftströmung angeordnet sind, um die Bewegung des Zapfens in die erste Richtung zu begrenzen, **dadurch gekennzeichnet, dass** das wenigstens eine Befestigungselement (66) zwischen den beiden Anschlägen (58, 58') angeordnet ist.

3. Gondel eines Luftfahrzeugs nach Anspruch 1 oder 2, **dadurch gekennzeichnet, dass** der weibliche Teil die Gestalt einer Platte (52) aufweist, die in einer Ebene angeordnet ist, die im Wesentlichen im rechten Winkel zur radialen, zweiten Richtung angeordnet ist, und die eine zur Aufnahme des Zapfens (40) eingerichtete Öffnung (54) und eine geringe Dicke von weniger als 6 mm aufweist.

4. Gondel eines Luftfahrzeugs nach Anspruch 3, **dadurch gekennzeichnet, dass** die Platte (52) mit dem festen Teil mithilfe von Winkelträgern (56) verbunden ist, wobei Verbindungselemente das Anbringen der Winkelträger (56) am festen Teil (20) und der Winkelträger (56) an der Platte (52) gewährleisten.

5. Gondel eines Luftfahrzeugs nach einem der Ansprüche 1 bis 4, **dadurch gekennzeichnet, dass** der Zapfen (40) mit einer Zwischenplatte (68) mithilfe wenigstens eines Befestigungselements (66) verbunden ist, wobei die Zwischenplatte (68) mit der Klappe (14) durch eine oder mehrere Befestigungselemente (70) verbunden ist.

6. Gondel eines Luftfahrzeugs nach Anspruch 5, **dadurch gekennzeichnet, dass** das oder die Befestigungselemente (70) der Zwischenplatte (68) an der Klappe (14) eine Scherfestigkeit haben, die verschieden von derjenigen des oder der Befestigungselemente (66) des Zapfens (40) an dem Zwischenblech (68) sind.

7. Gondel eines Luftfahrzeugs nach Anspruch 5 oder 6, **dadurch gekennzeichnet, dass** die Zwischenplatte (68) einen im Wesentlichen dreieckigen Querschnitt aufweist, wobei der Zapfen (40) an einer Spitze angebracht ist und die Verbindungselemente (70) an der Platte in der Nähe des entgegengesetzten Randes derart verteilt sind, dass die Belastungen nicht konzentriert, sondern über die größtmögliche Oberfläche verteilt sind.

## Claims

1. Aircraft nacelle that comprises at least one part, called a door (14), in the form of a composite material plate (44), that moves relative to a stationary part (20) and a connecting device that makes it possible to limit the offset between said door and said stationary part in a first direction that corresponds to the primary direction of the flow of air outside of the nacelle during flight, said device comprising, on the one hand, an indexer (40) that is connected to the upstream edge of the door (14) that comprises an attachment surface (63) parallel to the plan of the door (14), and on the other hand, at least one stop (58) that is connected to the stationary part (20) against which said indexer (40) can rest in such a way as to limit its movement in said first direction, **characterized by** at least one attachment element (66) oriented in a second radial direction perpendicular to the plan of the door (14), said at least one attachment element (66) being arranged upstream from the stop (58) in the first direction, said at least one stop (58) comprising a surface (60) relative to the door arranged essentially at the attachment surface (63) of the indexer (40).

2. Aircraft nacelle according to Claim 1, whereby the connecting device comprises a female part with two stops (58, 58') that are separated by an offset E in the first direction of the flow of air for limiting the movement of the indexer in said direction, wherein said at least one attachment element (66) is arranged between the two stops (58, 58').

3. Aircraft nacelle according to Claim 1 or 2, wherein the female part comes in the form of a plate (52), arranged in a plane that is essentially perpendicular to the second radial direction comprising an opening (54) that can house an indexer (40), with a small thickness, less than 6 mm.

4. Aircraft nacelle according to Claim 3, wherein the plate (52) is connected to the stationary part using brackets (56), connecting elements ensuring the engagement of said brackets (56) to the stationary part (20) and of said brackets (56) to said plate (52).

5. Aircraft nacelle according to any of Claims 1 to 4, wherein the indexer (40) is connected to an intermediate plate (68) using at least one attachment element (66), whereby said intermediate plate (68) is connected to the door (14) by one or more attachment elements (70).

6. Aircraft nacelle according to Claim 5, wherein the element(s) (70) for attachment of said intermediate plate (68) to the door (14) have a shearing resistance that is different from that of the element(s) (66) for attachment of the indexer (40) to said intermediate piece of sheet metal (68).

7. Aircraft nacelle according to Claim 5 or 6, wherein said intermediate plate (68) has an approximately triangular cross-section, whereby the indexer (40) is attached to a top, the elements (70) for attachment to the door being distributed close to the opposite side in such a way as to not concentrate the stresses but to distribute them over a larger surface.
